# EUROPEAN PATENT SPECIFICATION

(11) **EP 1 294 231 B1**
(45) Date of publication and mention of the grant of the patent: **14.01.2004**
(21) Application number: 00942177.7
(22) Date of filing: 13.06.2000
(51) Int. Cl.: A01N 41/10, A01N 41/04, A01N 35/06

(54) **METHOD FOR IMPROVING THE SELECTIVITY OF 1,3-CYCLOHEXANEDIONE HERBICIDE**
VERFAHREN ZUR VERBESSERUNG DER SELEKTIVITÄT VON 1,3-CYCLOHEXANDION-HERBIZIDEN
PROCEDE POUR AMELIORER LA SELECTIVITE D'UN HERBICIDE A BASE DE 1,3-CYCLOHEXANEDIONE

(43) Date of publication of application: 26.03.2003
(73) Proprietor: Syngenta Limited, Guildford Surrey GU2 7YH (GB)
(72) Inventor: SCHER, Herbert, Benson, Moraga, CA 94556 (US); CHEN, Jinling, Houston, TX 77059 (US)
(74) Representative: Swift, Jane Elizabeth Berrisford
(86) International application number: PCT/GB2000/002287
(87) International publication number: WO 2001/095722

(56) References cited:
- WO-A-97/27748
- DD-A- 200 848
- DD-A- 260 646
- US-A- 5 668 089

## Description

### FIELD OF THE INVENTION

The present invention is directed to the use of metal chelates as a delivery system to improve the selectivity of 2-(substituted benzoyl)-1,3-cyclohexanedione compounds as post-emergence herbicides in crops.

### BACKGROUND OF THE INVENTION

The protection of crops from weeds and other undesirable vegetation which inhibit crop growth is a constantly recurring problem in agriculture. To help combat this problem researchers in the field of synthetic chemistry have produced an extensive variety of chemicals and chemical formulations effective in the control of such unwanted growth. Chemical herbicides of many types have been disclosed in the literature and a large number are in commercial use.

Unfortunately, many of such herbicides exhibit phytotoxicity to the desired crop as well as to the weeds sought to be controlled. Thus, there is a long-standing need for selective herbicides which will control frequently occurring weeds but which will not adversely affect the crop plants when applied at herbicidally effective levels.

U.S. Pat. Nos. 4,780,127, 4,938,796, 5,006,158 and 5,089,046 disclose 2-(substituted benzoyl)-1,3-cyclohexanedione compounds having the general structure: 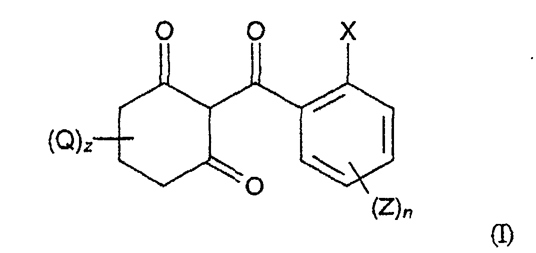 wherein X, Q and Z have the meanings set forth hereinafter. These dione compounds have proved to be effective pre-emergent and postemergent herbicides against a wide variety of grasses, broadleaf weeds and sedges. US 5 668 089 discloses one of these compounds, 2-(2'-nitro-4'-trifluoromethylbenzoyl)-1,3-cyclohexanedione as a selective herbicide in corn. Moreover, PCT Application No. 97/27748 discloses that metal chelates of 2-(substituted benzoyl)-1,3-cyclohexanedione compounds have proved to be chemically stable for long periods of time under normal as well as extreme temperature conditions.

The parent cyclohexanedione exhibits a substantial phytotoxic effect. In contrast, it has now been discovered that metal chelates of 2-(substituted benzoyl)-1,3-cyclohexanedione compounds will effectively control a broad range of weeds without exhibiting any substantial phytotoxic effect on the crop itself.

### SUMMARY OF THE INVENTION

The present invention is directed to methods of selectively controlling weeds and other undesirable vegetation in a given crop such as wheat. In one embodiment of this invention, the method comprises the postemergent application of an herbicidally effective amount of a metal chelate of a 2-(substituted benzoyl)-1,3-cyclohexanedione to the locus of such weeds and other vegetation. In another embodiment of this invention, the method comprises the postemergent application of an herbicidally effective amount of a metal chelate of a 2-(substituted benzoyl)-1,3-cyclohexanedione to the locus of such weeds and other vegetation, said metal chelate having been formulated as a microcapsule.

As is employed herein, the term "herbicide" is used to denote a compound which controls or modifies the growth of plants. The term "herbicidally effective amount" is used to indicate the quantity of such compound which is capable of producing a controlling or modifying effect. Controlling or modifying effects include all deviations from natural development, for example: killing, retardation, leaf burn, albinism, dwarfing, and the like. The term "plants" refers to all physical parts of a plant, including seeds, seedlings, saplings, roots, tubers, stems, stalks, foliage, and fruits.

### DETAILED DESCRIPTION OF THE INVENTION

The present invention relates to the use of metal chelates of herbicidal dione compounds to selectively control weeds and other undesirable vegetation in a given crop such as wheat. These herbicidal dione compounds have the general formula (I): 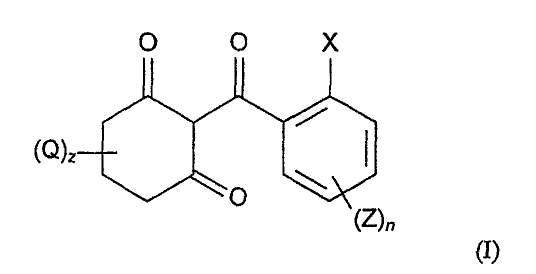 wherein
X represents a halogen atom; a straight- or branched-chain alkyl or alkoxy group containing up to six carbon atoms which is optionally substituted by one or more groups -OR¹ or one or more halogen atoms; or a group selected from nitro, cyano, -CO₂ R² -S(O)_{*m*}R¹, -O(CH₂)_{*r*}OR¹, -COR², -OSO₂R⁴ , -NR²R³, -SO₂NR²R³, -CONR²R³ and -CSNR²R³;
R¹ represents a straight- or branched-chain alkyl group containing up to six carbon atoms which is optionally substituted by one or more halogen atoms;
R² and R³ each independently represents a hydrogen atom; or a straight- or branched-chain alkyl group containing up to six carbon atoms which is optionally substituted by one or more halogen atoms;
R⁴ represents a straight- or branched-chain alkyl, alkenyl or alkynyl group containing up to six carbon atoms optionally substituted by one or more halogen atoms; or a cycloalkyl group containing from three to six carbon atoms;
each Z independently represents halo, nitro, cyano, S(O)_{*m*}R⁵ , OS(O)_{*m*}R⁵, (C₁-C₆)alkyl, (C₁-C₆)alkoxy, (C₁-C₆)haloalkyl, (C₁-C₆)haloalkoxy, carboxy, (C₁-C₆)alkylcarbonyloxy, (C₁-C₆)alkoxycarbonyl, (C₁-C₆)alkylcarbonyl, amino, (C₁-C₆)alkylamino, (C₁-C₆)dialkylamino having independently the stated number of carbon atoms in each alkyl group, (C₁-C₆)alkylcarbonylamino, (C₁-C₆)alkoxycarbonylamino, (C₁-C₆)alkylaminocarbonylamino, (C₁-C₆)dialkylaminocarbonylamino having independently the stated number of carbon atoms in each alkyl group, (C₁-C₆)alkoxycarbonyloxy, (C₁-C₆)alkylaminocarbonyloxy, (C₁-C₆)dialkylaminocarbonyloxy, phenylcarbonyl, substituted phenylcarbonyl, phenylcarbonyloxy, substituted phenylcarbonyloxy, phenylcarbonylamino, substituted phenylcarbonylamino, phenoxy or substituted phenoxy;
R⁵ represents cyano; -COR⁶; -CO₂R⁶; or -S(O)_{*m*}R⁷;
R⁶ represents hydrogen or straight- or branched-chain alkyl group containing up to six carbon atoms;
R⁷ represents (C₁-C₆)alkyl, (C₁-C₆)haloalkyl, (C₁-C₆)cyanoalkyl (C₃-C₈)cycloalkyl optionally substituted with halogen, cyano or (C₁-C₄)alkyl; or phenyl optionally substituted with one to three of the same or different halogen, nitro, cyano, (C₁-C₄)haloalkyl, (C₁-C₄ alkyl, (C₁-C₄)alkoxy or -S(O)_{*m*}R⁸;
R⁸ represents (C₁-C₄) alkyl, (C₁-C₄) alkyl substituted with halogen or cyano, phenyl or benzyl;
each Q independently represents C₁-C₄ alkyl or -CO₂R⁹ wherein R⁹ is C₁-C₄ alkyl;
*m* is zero, one or two;
*n* is zero or an integer from one to four;
*r* is one, two or three; and
*z* is 0 or an integer from 1 to 6.

As used herein, the terms "halogen" and "halo" include fluorine, chlorine, bromine and iodine atoms. In polyhalogenated groups, the halogens may be the same or different. The term "substituted" in terms of "substituted phenylcarbonyl," "substituted phenylcarbonyloxy," "substituted phenylcarbonylamino" and "substituted phenoxy" means having one to five substituents, which may be the same or different, selected from the following: halo, nitro, cyano, S(O)_{*m*}R², (C₁-C₆)alkyl, (C₁-C₆)alkoxy, (C₁-C₆)haloalkyl, (C₁-C₆)haloalkoxy, carboxy, (C₁-C₆)alkylcarbonyloxy, (C₁-C₆)alkylcarbonyl, (C₁-C₆)alkoxycarbonyl, (C₁-C₆)alkylcarbonylamino, amino, (C₁-C₆)alkylamino and (C₁-C₆)dialkylamino having independently the stated number of carbon atoms in each group.

The 2-(substituted benzoyl)-1,3-cyclohexanedione compounds of formula I are described, *inter alia,* in U.S. Patent Nos. 4,780,127, 4,938,796, 5,006,158 and 5,089,046, the disclosures of which are incorporated herein by reference. Herbicidal 2-(substituted benzoyl)-1,3-cyclohexanedione compounds for use in this invention may be prepared by the methods described in the aforementioned patent publications, or by the application and adaptation of known methods used or described in the chemical literature.

2-(substituted benzoyl)-1,3-cyclohexanedione compounds especially useful in the present invention include those in which *z* is zero; X is chloro, bromo, nitro, cyano, C₁-C₄ alkyl, -CF₃, -S(O)ₘR¹ or -OR¹; *n* is one or two; and each Z is independently chloro, bromo, nitro, cyano, C₁-C₄ alkyl, -CF₃, -OR¹, -OS(O)ₘR⁵ or -S(O)ₘR⁵. Examples of preferred cyclohexanedione compounds are 2-(2'-nitro-4'-methylsulfonylbenzoyl)-1,3-cyclohexanedione, 2-(2'-nitro-4'- methylsulfonyloxybenzoyl)-1,3-cyclohexanedione and 2-(2'-chloro-4'-methylsulfonylbenzoyl)-1,3-cyclohexanedione.

Compounds of formula (I) may exist in enolic tautomeric forms that may give rise to geometric isomers. Furthermore, in certain cases, the various substituents may contribute to optical isomerism and/or stereoisomerism. All such forms are embraced within compounds useful in the present invention.

Metal chelates of 2-(substituted benzoyl)-1,3-cyclohexanedione compounds of formula I are described, *inter alia,* in PCT Application No. 97/27748, the disclosures of which are incorporated herein by reference. Metal chelates of 2-(substituted benzoyl)-1,3-cyclohexanedione compounds have the general structure: 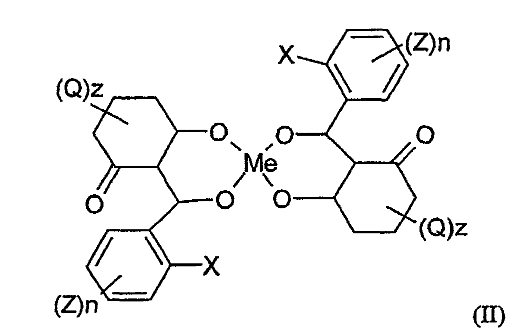 wherein X, Q and Z have the meanings set forth above, and Me represents a di- or trivalent metal ion such as Cu⁺², Co⁺², Zn⁺², Ni⁺², Ca⁺², Al⁺³, Ti⁺³ and Fe⁺³.

Herbicidal metal chelates of 2-(substituted benzoyl)-1,3-cyclohexanedione compounds for use in this invention may be prepared by the methods described in the aforementioned PCT application, or by the application and adaptation of known methods used or described in the chemical literature.

Metal ions which may be useful in forming the metal chelate compounds of the present invention include di- or trivalent metal ions such as Cu⁺², Co⁺², Zn⁺², Ni⁺², Ca⁺², Al⁺³, Tï⁺³ and Fe⁺³. The selection of a particular metal ion to form the metal chelate compound will depend upon the dione compound to be chelated and the strength of the metal chelate complex. Without being bound by theory, it appears as if the strength of the metal chelate complex is directly related to the release rate of the triketone from the metal chelate complex, which in turn is related to the selectivity of the metal chelate compounds of this invention. Those skilled in the art will be able to readily determine the appropriate metal ion for use with a specific dione compound without undue experimentation. The preferred metal ions are divalent transition metal ions, particularly Cu⁺², Ni⁺², Zn⁺² and Co⁺², with Cu⁺² being especially preferred.

Any appropriate salt which would be a source of a di- or trivalent metal ion may be used to form the metal chelate of the dione compound in accordance with this invention. Particularly suitable salts include: chlorides, sulfates, nitrates, carbonates, phosphates and acetates.

It also has been found that the stability and the activity of the herbicidal metal chelate compositions of the present invention is pH dependent. The pH of the metal chelate compositions should be between about 2 and about 10, preferably between about 3 and about 7. Generally, it is believed that for Cu⁺² chelate compositions the pH should be between about 4 and 6; for Co⁺² between about 3 and 5; and for Ni⁺² and Zn⁺² about 5. The optimum pH for a particular metal chelate composition can be determined using routine experimental techniques.

The metal chelate of the herbicidal 2-(substituted benzoyl)-1,3-cyclohexanedione compounds can be formulated in the same manner in which herbicides are generally formulated. The choice of formulation and mode of application for any given herbicidal compound may affect its activity, and selection must be made accordingly. Herbicidal compositions may thus be formulated as water dispersible granules, as wettable powders, as powders or dusts, as suspensions, or as controlled release forms such as microcapsules. The formulation of the metal chelate of the herbicidal 2-(substituted benzoyl)-1,3-cyclohexanedione compounds for use in this invention may be prepared by the methods described in the aforementioned patent application or by the application and adaptation of known methods used or described in the chemical literature. Processes for microencapsulating the herbicidal composition specifically have been described in U.S. Patent Nos. 4,285,720 and 4,956,129 and U.S. Application Serial No. 08/354,409, and may also be prepared by the application and adaptation of known methods used or described in the chemical literature. The object of the formulation, however, is to apply the compositions to the locus where control is desired by a convenient method (i.e., postemergent application). The "locus" is intended to include soil, as well as established vegetation.

Formulations containing the metal chelates of the herbicidal dione compounds of formula (I) can be applied by conventional methods to the areas where control is desired. The formulations containing an herbicidal metal chelate according to the invention can also be produced as premixes with other herbicides, or can be tank-mixed with one or more additional herbicidal or other agricultural compositions. Specific examples of other herbicides which may be incorporated in an herbicidal formulation with the metal chelates according the invention include acetanilides, tralkoxydim, bromoxynil and its esters, thiafluamide, MCPA and its esters, 2,4-D and its esters, and fluroxypyr meptyl.

In the practice of the present invention, the metal chelate of the herbicidal 2-(substituted benzoyl)-1,3-cyclohexanedione compounds is applied postemergent to the locus of the undesirable vegetation to be controlled. Application rates will depend on the particular plant species and degree of control desired. In general, application rates of between about 5 and about 500 g/ha may be employed.

The following examples are for illustrative purposes only and are not intended as necessarily representative of the overall testing performed and are not intended to limit the invention in any way.

### SPECIFIC EMBODIMENTS OF THE INVENTION

### Example 1

All of the metal chelate compounds used in the 1,3-cyclohexanedione formulations of this example were prepared using a mix and mill process except for Formulation C which was formulated using a precipitation process. Both the mix and mill process and the precipitation process are described in more detail in PCT Application No. 97/27748, the disclosure of which has been incorporated herein by reference.

Twelve days after the seeds were sown in aluminum flats (containing soil comprising 2 parts sandy loam to 1 part peat), the 1,3-cyclohexanedione suspension formulations (at the rates listed in Table I below) were applied postemergence to the following plant species: *Galium aparine* (catchweed bedstraw) ("GALAP"); *Chenopodium album* (lambsquarters) ("CHEAL"); *Matricaria inodora* (scentless flase chamomile) ("MATIN"); and wheat.

The flats were placed in a greenhouse and evaluated 6 and 21 days after application ("DAA"). Injury was evaluated as percent control, with percent control being the total injury to the plants due to all factors including: Inhibited emergence, stunting, malformation, albinism, chlorisis, and other types of plant injury. The control rating range from 0 to 100 percent, where 0% represents no effect with growth equal to the untreated control and where 100% represents a complete kill.

The results observed (as a mean of 3 replications) are summarized in Table I below.

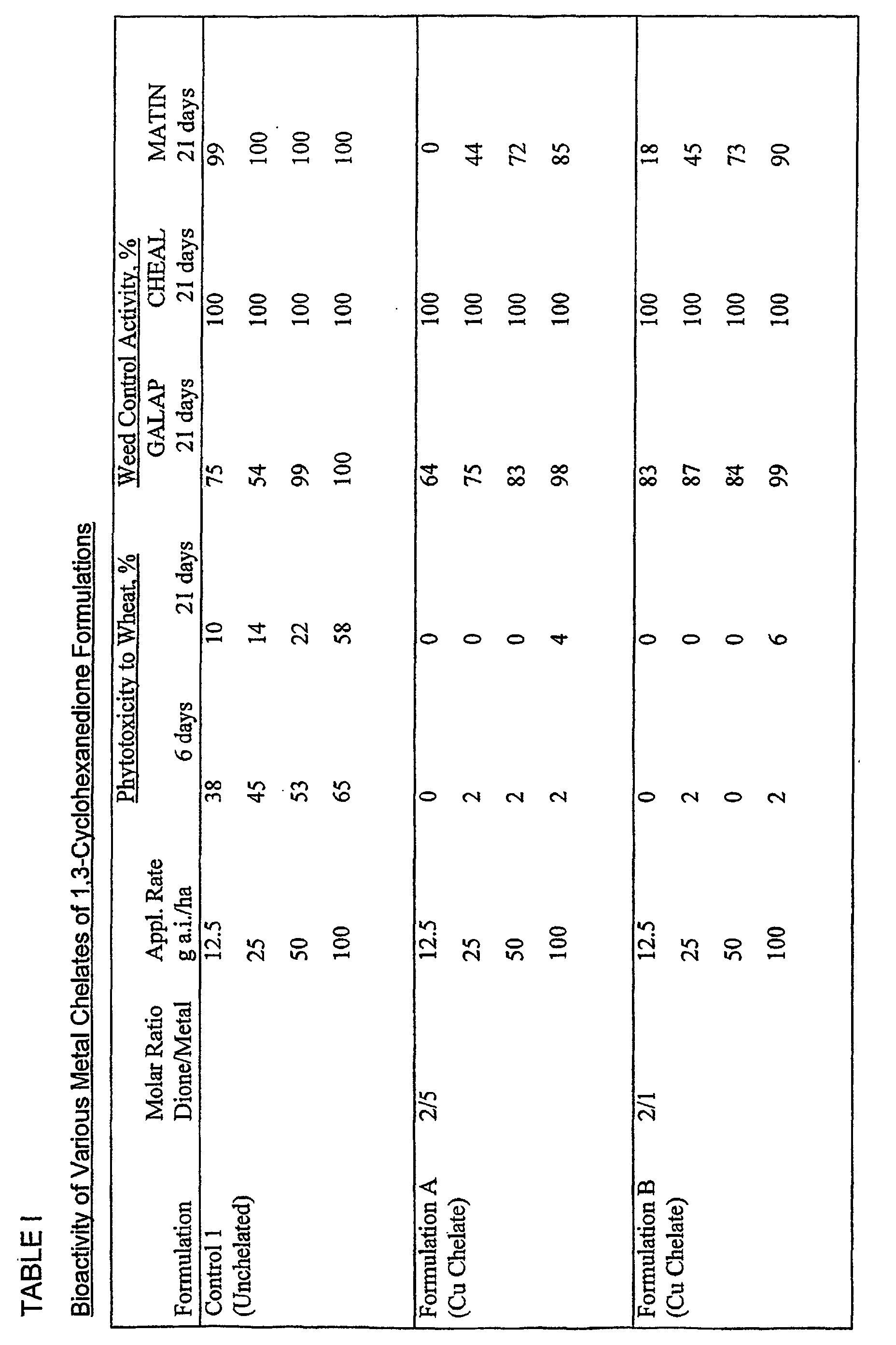

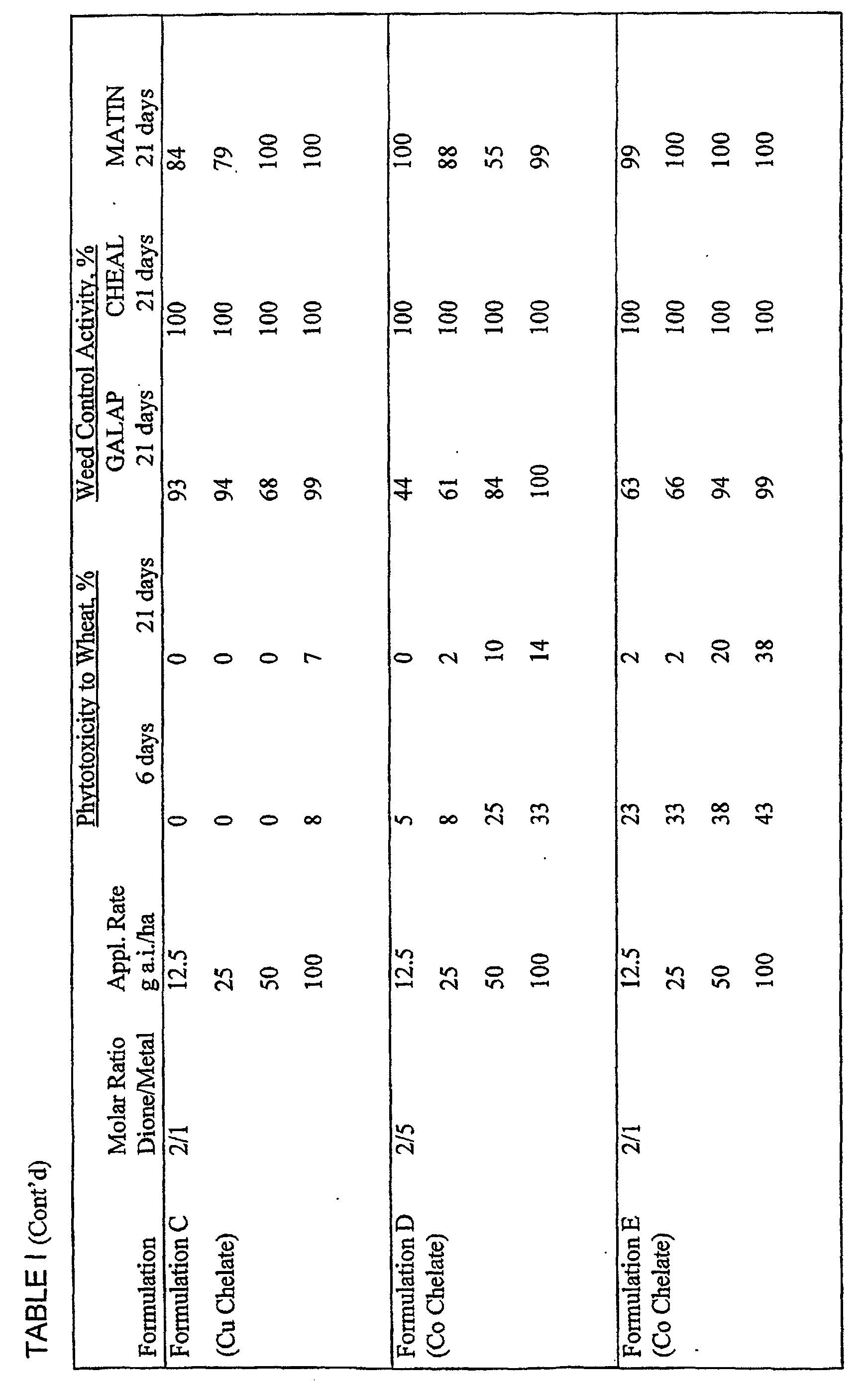

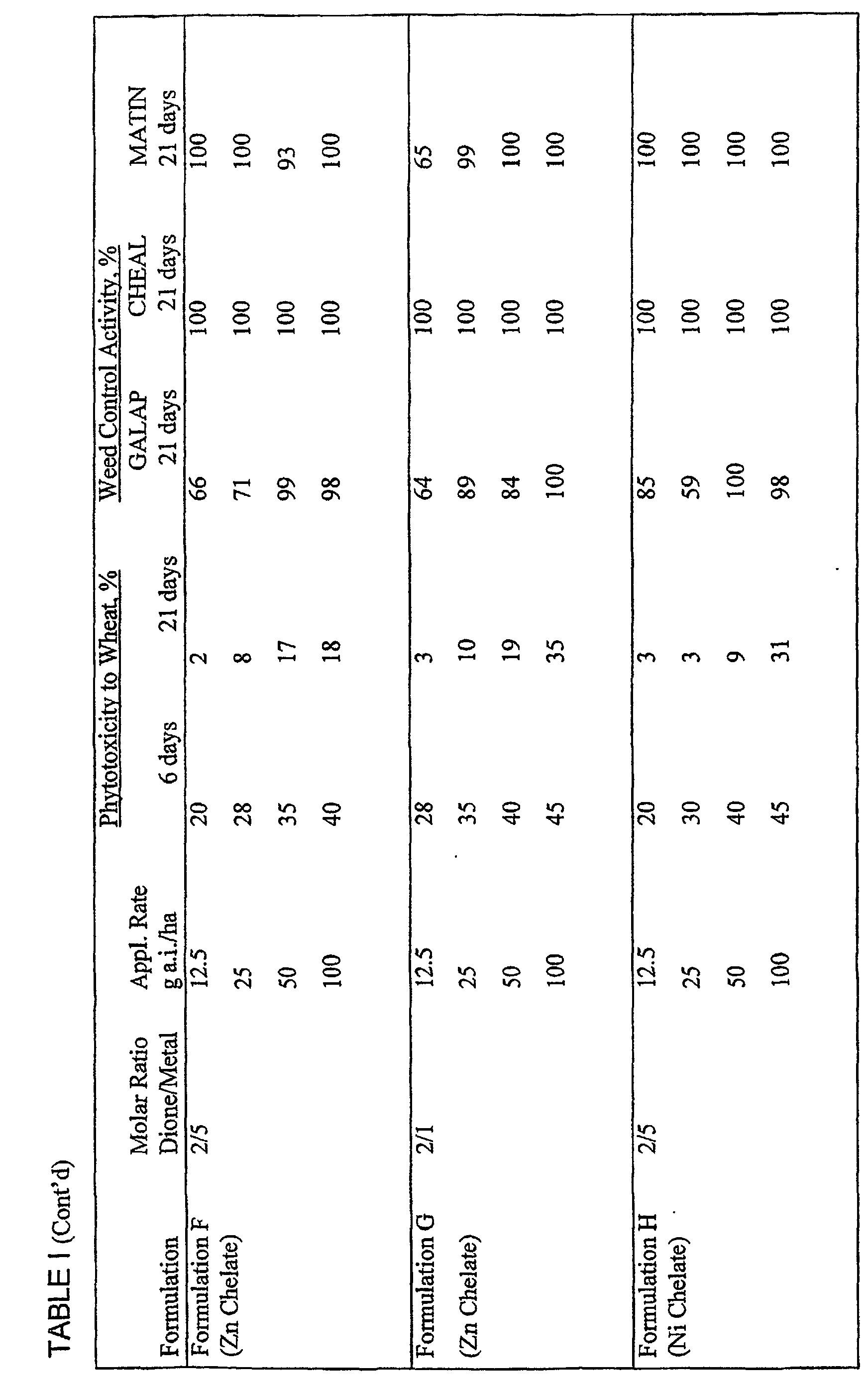

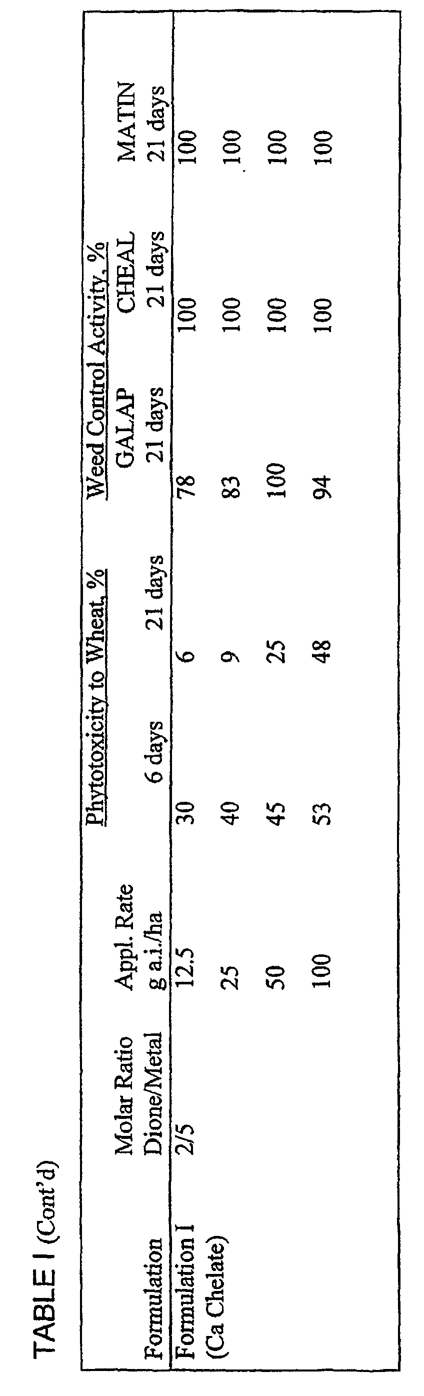

From these results, it is clear that the phytotoxicity of the 1,3-cyclohexanedione formulations to wheat was reduced by chelation. In contrast, however, the herbicidal activity of the 1,3-cyclohexanedione formulations on the weeds and other undesirable vegetation was only slightly affected by chelation. In addition, it is also apparent from these results that the activity of the 1,3-cyclohexanedione formulation varied depending on the metal ion used to form the metal chelate compound.

### Example 2

The metal chelate compounds used in the 1,3-cyclohexanedione suspension formulations of this example were prepared using the mix and mill process as described in Example 1. Moreover, a procedure essentially identical to that described in Example 1 was employed for the postemergent application of the 1,3-cyclohexanedione suspension formulations (at the rates listed in Table II below) to aluminum flats containing the following plant species: CHEAL; *Amaranthus retroflexus* (redroot pigweed)("AMARE"); *Polygonum convolvulus* (wild buckwheat)("POLCO"); *Brassica kaber* (wild mustard)("SINAR"); *Thlaspi arventse* (field pennycress)("THLAR"); *Brassica canpestris* (oilseed rape)("BRSNN"); wheat ("TRZAS"); and barley ("HORVS"). Injury was evaluated at 8 and 32 DAA.

The results observed (as a mean of 4 replications) are summarized in Table II below.

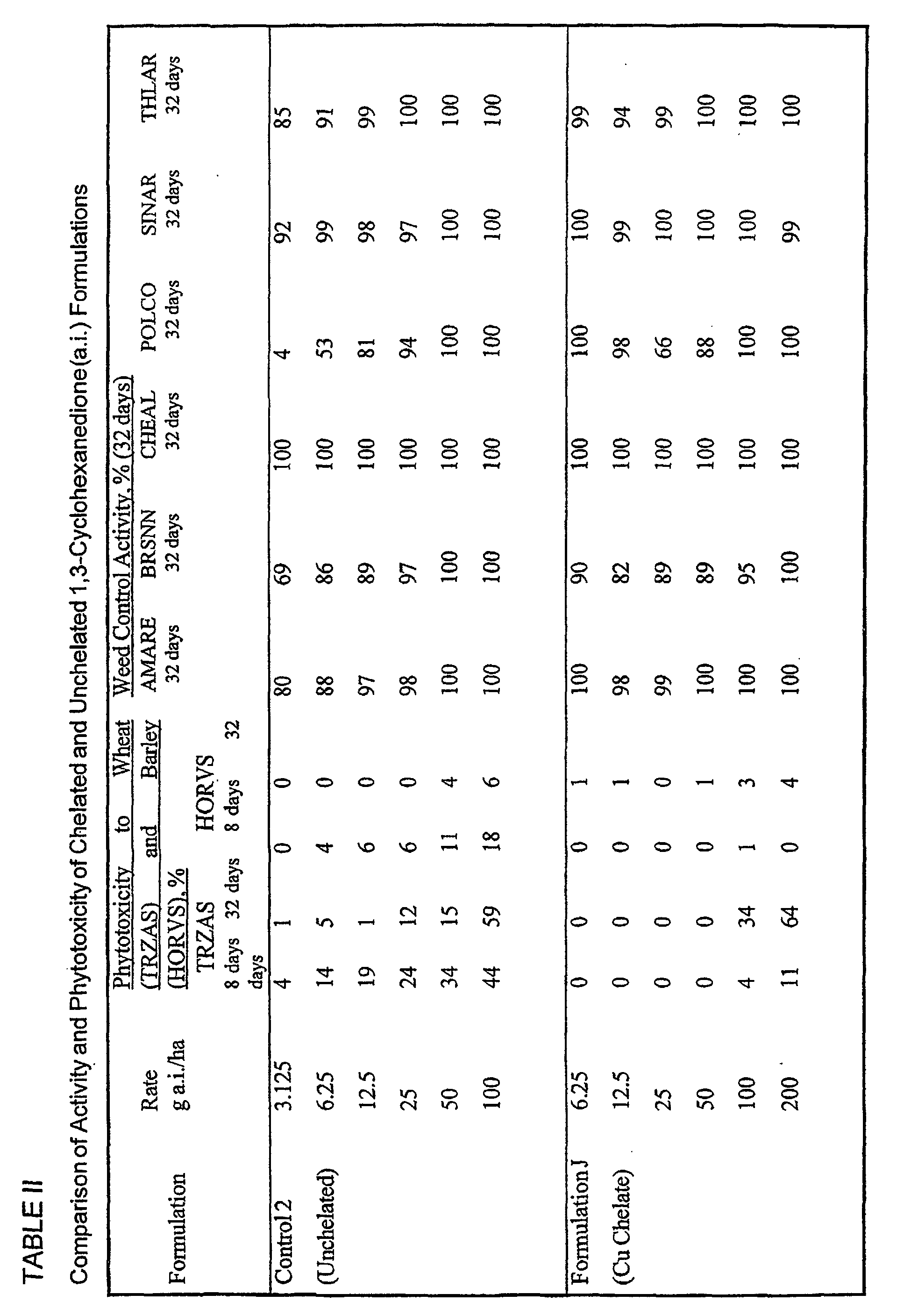

These data indicate that the copper chelate of 2-(substituted benzoyl)-1,3-cyclohexanedione, Formulation J, showed an 16X increase in wheat selectivity at early assessment compared to the unchelated formulation (Control 2). Weed control activity of the copper chelate formulation was approximately the same as that of the unchelated formulation.

### Example 3

The metal chelate compounds used in the 1,3-cyclohexanedione formulations of this example were prepared using the mix and mill process as described in Example 1. Control 3 and Formulation K were formulated as suspension formulations and Formulation L was formulated as microcapsules.

Employing a procedure essentially identical to that described in Example 1, the 1,3-cyclohexanedione formulations were applied postemergence at the rates listed in Table III below to aluminum flats containing the following plant species: AMARE, BRSNS, POLCO, SINAR and TRZAS. Injury was evaluated at 6 and 22 DAA.

The results observed (as a mean of 4 replications) are summarized in Table III below.

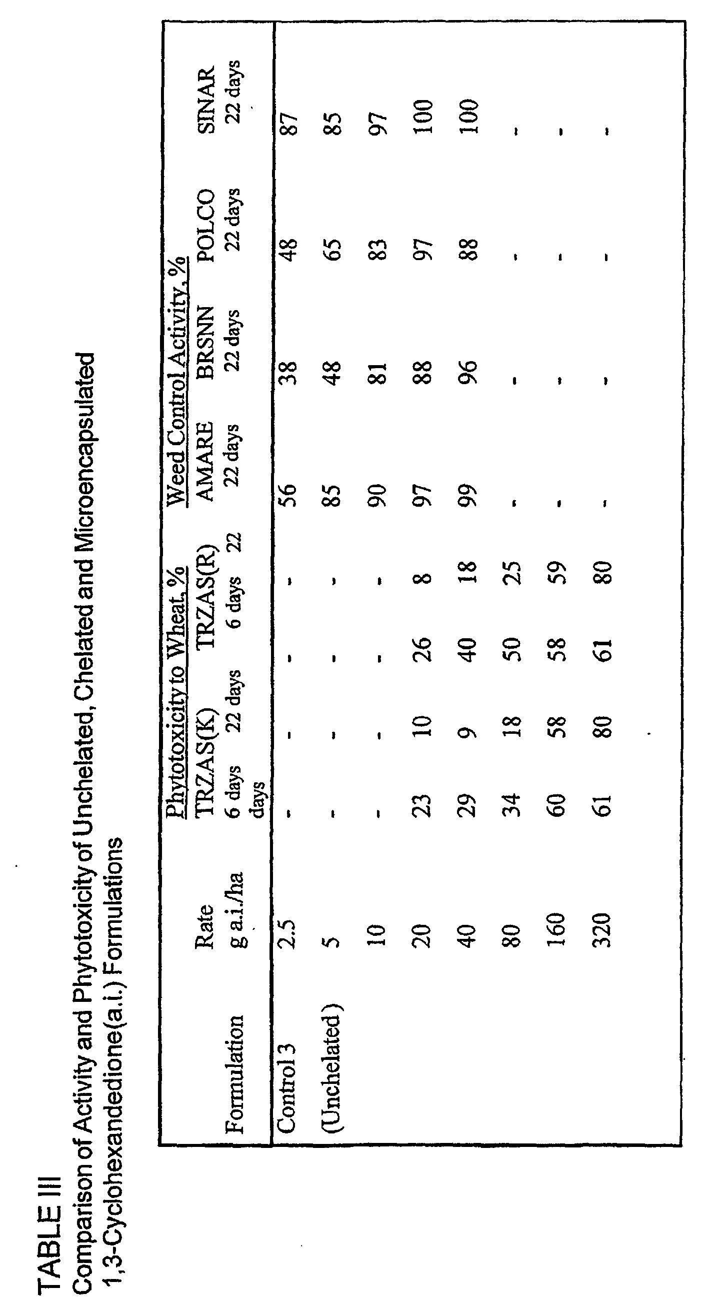

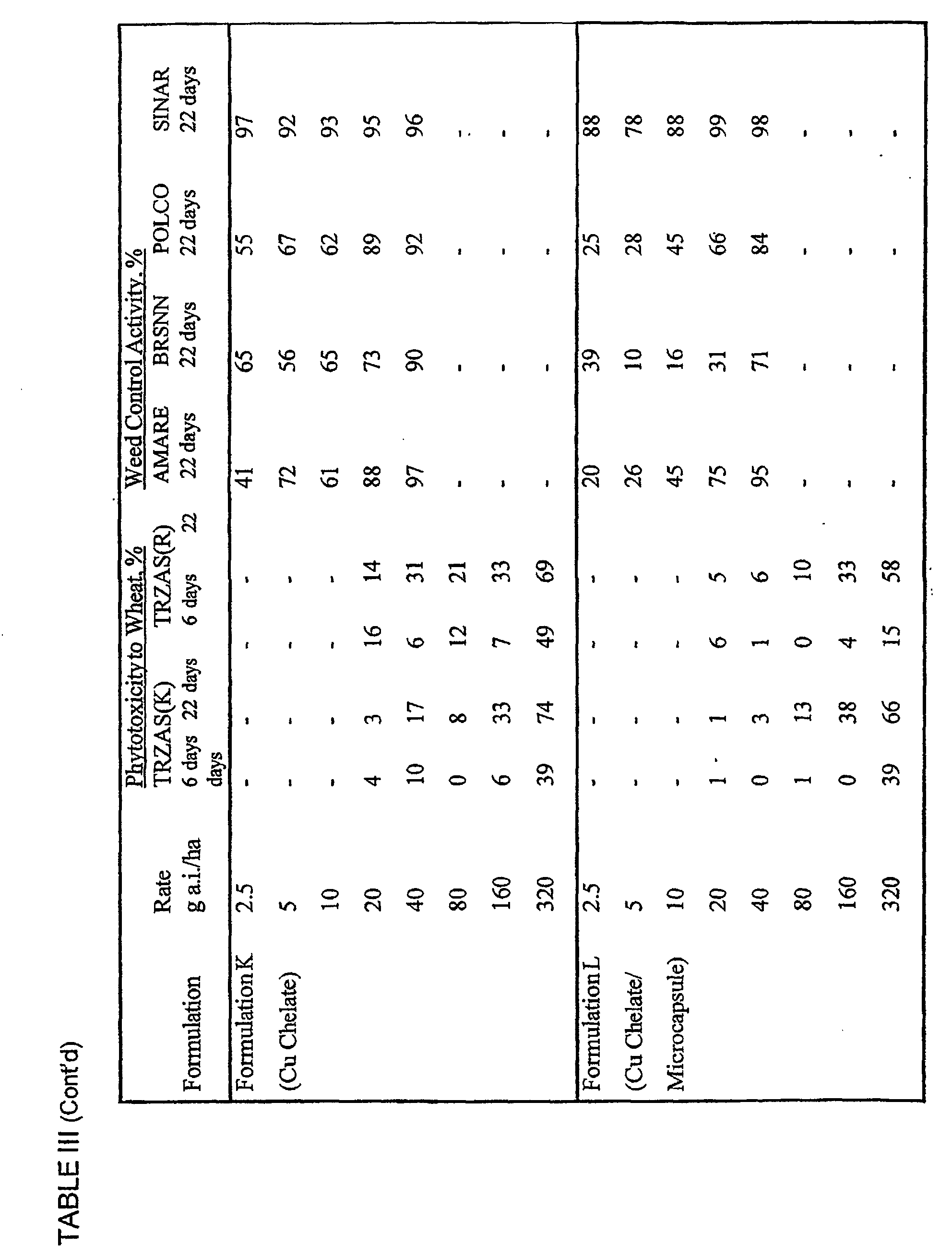

The above data indicates that the copper chelate of 2-(substituted benzoyl)-1,3-cyclohexanedione (Formulation K) showed improved selectivity over the unchelated formulation (Control 3). These data also indicate that the selectivity of the copper chelate of 2-. (substituted benzoyl)-1,3-cyclohexanedione was further improved by microencapsulation (FormulationL).

The foregoing description and example are for the purpose of illustration only and does not limit the scope of protection which should be accorded this invention.

## Claims

1. A method of selectively controlling undesirable vegetation in a desired crop comprising applying to the locus of said vegetation an herbicidally effective amount of a metal chelate of a 2-(substituted benzoyl)-1,3-cyclohexanedione selected from 2-(2'-nitro-4'-methylsulfonylbenzoyl)-1,3-cyclohexanedione, 2-(2'-nitro-4'-methyl sulfonyloxybenzoyl)-1,3-cyclohexanedione and 2-(2'-chloro-4'-methylsulfonylbenzoyl)-1,3-cyclohexanedione.

2. The method in accordance with claim 1 wherein the metal chelate of the 2-(substituted benzoyl)-1,3-cyclohexanedione is comprised of a metal ion selected from the group consisting of copper, cobalt, zinc, nickel, aluminum, calcium, titanium and iron.

3. The method in accordance with claim 2 wherein the metal ion is copper.

4. The method in accordance with claim 1 wherein the pH of the metal chelate of the 2-(substituted benzoyl)-1,3-cyclohexanedione is between about 2 and 10.

5. The method in accordance with claim 4 wherein the pH of the metal chelate of the 2-(substituted benzoyl)-1,3-cyclohexanedione is between about 3 and 7.

6. The method in accordance with claim 1 wherein the metal chelate of the 2-(substituted benzoyl)-1,3-cyclohexanedione is applied postemergence.

7. The method in accordance with claim 1 wherein the metal chelate of the 2-(substituted benzoyl)-1,3-cyclohexanedione is microencapsulated.

8. The method in accordance with claim 1 wherein the desired crop is wheat.

## Patentansprüche

1. Verfahren zur selektiven Bekämpfung ungewünschter Vegetation in gewünschten Anbaupflanzen, umfassend. das Ausbringen einer herbizid wirksamen Menge eines Metallchelats eines 2-(substituiertes Benzoyl)-1,3-cyclohexandions, ausgewählt aus 2-(2'-Nitro-4'methylsulfonylbenzoyl)-1,3-cyclohexandion, 2-(2'-Nitro-4'-methylsulfonyloxybenzoyl)-1,3-cyclohexandion und 2-(2'-Chlor-4'-methylsulfonylbenzoyl)-1,3-cyclohexandion, auf den Locus der Vegetation.

2. Verfahren gemäss Anspruch 1, worin das Metallchelat des 2-(substituiertes Benzoyl)-1,3-cyclohexandions ein Metallion umfasst, das aus der Gruppe ausgewählt ist, die aus Kupfer, Cobalt, Zink, Nickel, Aluminium, Calcium, Titan und Eisen besteht.

3. Verfahren gemäss Anspruch 2, worin das Metallion Kupfer ist.

4. Verfahren gemäss Anspruch 1, worin der pH des Metallchelats des 2-(substituiertes Benzoyl)-1,3-cyclohexandions zwischen ca. 2 und 10 ist.

5. Verfahren gemäss Anspruch 4, worin der pH des Metallchelats des 2-(substituiertes Benzoyl)-1',3-cyclohexandions zwischen ca. 3 und 7 ist.

6. Verfahren gemäss Anspruch 1, worin das Metallchelat des 2-(substituiertes Benzoyl)-1,3-cyclohexandions nach dem Aufgehen ausgebracht wird.

7. Verfahren gemäss Anspruch 1, worin das Metallchelat des 2-(substituiertes Benzoyl)-1,3-cyclohexandions mikroverkapselt ist.

8. Verfahren gemäss Anspruch 1, worin die gewünschten Anbaupflanzen Weizen sind.

## Revendications

1. Procédé de lutte sélective contre de la végétation indésirable dans une culture souhaitée, comprenant d'appliquer au site de ladite végétation une quantité herbicidement efficace d'un chélate métallique d'une 2-(benzoyle substitué)-1,3-cyclohexanedione choisie parmi la 2-(2'-nitro-4'-méthylsulfonylbenzoyl)-1,3-cyclohexanedione, la 2-(2'-nitro-4'-méthylsulfonyloxybenzoyl)-1,3-cyclohexanedione et la 2-(2'-chloro-4'méthylsulfonylbenzoyl)-1,3-cyclohexanedione.

2. Procédé selon la revendication 1, dans lequel le chélate métallique de la 2-(benzoyle substitué)-1,3-cyclohexanedione est composé d'un ion métallique choisi dans le groupe constitué par le cuivre, le cobalt, le zinc, le nickel, l'aluminium, le calcium, le titane et le fer.

3. Procédé selon la revendication 2, dans lequel l'ion métallique est le cuivre.

4. Procédé selon la revendication 1, dans lequel le pH du chélate métallique de la 2-(benzoyle substitué)-1,3-cyclohexanedione est compris entre environ 2 et 10.

5. Procédé selon la revendication 4, dans lequel le pH du chélate métallique de la 2-(benzoyle substitué)-1,3-cyclohexanedione est compris entre environ 3 et 7.

6. Procédé selon la revendication 1, dans lequel le chélate métallique de la 2-(benzoyle substitué)-1,3-cyclohexanedione est appliqué postérieurement à la levée.

7. Procédé selon la revendication 1, dans lequel le chélate métallique de la 2-(benzoyle substitué)-1,3-cyclohexanedione est microencapsulé.

8. Procédé selon la revendication 1, dans lequel la culture souhaitée est le blé.
